**Europäisches Patentamt**

**European Patent Office**

**Office européen des brevets**

(19)

(11) Veröffentlichungsnummer : **0 319 679 B1**

(12)

# EUROPÄISCHE PATENTSCHRIFT

(45) Veröffentlichungstag der Patentschrift :
**05.06.91 Patentblatt 91/23**

(51) Int. Cl.⁵ : **F16C 11/06**

(21) Anmeldenummer : **88117209.2**

(22) Anmeldetag : **15.10.88**

(54) Befestigung eines Dichtungsbalges am Gelenkgehäuse eines Kugelgelenkes.

(30) Priorität : **07.12.87 DE 3741347**

(43) Veröffentlichungstag der Anmeldung :
**14.06.89 Patentblatt 89/24**

(45) Bekanntmachung des Hinweises auf die
Patenterteilung :
**05.06.91 Patentblatt 91/23**

(84) Benannte Vertragsstaaten :
**DE FR GB IT**

(56) Entgegenhaltungen :
**DE-C- 3 339 874**
**GB-A- 1 181 900**
**US-A- 2 496 839**

(73) Patentinhaber : **TRW Ehrenreich GmbH & Co.**
**KG**
**Hansa-Allee 190**
**W-4000 Düsseldorf 11 (DE)**

(72) Erfinder : **Busse, Fritz**
**Ludwig-Richter-Weg 29**
**W-4010 Hilden (DE)**
Erfinder : **Hafeneger, Hans**
**Carmenstrasse 1**
**W-4000 Düsseldorf 11 (DE)**
Erfinder : **Mette, Ulrich**
**Burgstrasse 65i**
**W-4300 Essen 17 (DE)**

(74) Vertreter : **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11 (DE)**

**Beschreibung**

Gegenstand der Erfindung ist eine Befestigung eines Dichtungsbalges am Gelenkgehäuse eines Kugelgelenks, bei welcher der Dichtungsbalg mit einem Randwulst in einer von einer zylindrischen Mantelfläche und einer ringförmigen Stirnfläche gebildeten L-förmigen Ausnehmung am äußeren Rand einer Gehäuseöffnung liegt und bei welcher der Randwulst durch einen radial nach innen gebogenen äußeren Kreisring eines Halteringes teilweise umfaßt ist, der mit einem inneren Kreisring auf der Stirnfläche der L-förmigen Ausnehmung aufliegt.

Gegenstand der Erfindung ist außerdem ein Verfahren zur Befestigung eines Dichtungsbalges am Gelenkgehäuse eines Kugelgelenks, bei dem der Dichtungsbalg mit einem Randwulst in eine von einer zylindrischen Mantelfläche und einer ringförmigen Stirnfläche gebildete L-förmige Ausnehmung gebracht und durch Umbiegen eines äußeren Kreisringes eines Halteringes in dieser Stellung fixiert wird.

Aus der DE-C-33 39 874 ist eine Befestigung eines Dichtungsbalges am Gelenkgehäuse eines Kugelgelenks bekannt, bei welcher der Dichtungsbalg mit einem Randwulst in eine in axialer Richtung offene Ausnehmung am äußeren Rand der Gehäuseöffnung eingreift. Die Befestigung des Dichtungsbalges erfolgt durch einen in die Ausnehmung eingesetzten und in dieser befestigten, im Querschnitt L-förmigen Haltering, wobei die zylindrische Außenwand des Halteringes zur Fassung des Randwulstes radial nach innen umgebogen ist. Zur Befestigung des Halteringes am Gelenkgehäuse weist der ebene Boden der Ausnehmung eine radial innenliegende, umlaufende Ringstufe auf, aus der heraus Vorsprünge segmentartig ausgestemmt sind und auf diese Weise den Haltering innerhalb der Ausnehmung fixieren. Wenngleich auf diese Weise der Dichtungsbalg sicher gehalten wird, so ist diese Befestigungsmethode jedoch aufwendig, da zwei Bearbeitungsschritte notwendig sind. In einem ersten Schritt wird der Haltering am Gelenkgehäuse durch Verstemmen befestigt, in einem zweiten Schritt durch Umbiegen bzw. Umbördeln des Halteringes der Randwulst umschlossen.

Aus der US-A 24 96 839 ist eine Befestigung eines Dichtungsbalges am Gelenkgehäuse eines Kugelgelenkes bekannt, bei welcher eine umlaufende Nut am Rand der Gehäuseöffnung durch eine umlaufende, im Querschnitt L-förmige Ausnehmung am Gehäuserand einerseits und durch einen in die Ausnehmung eingesetzten und in dieser befestigten, im Querschnitt entgegengesetzt zur Ausnehmung L-förmigen Haltering andererseits gebildet ist. Der Haltering kann beispielsweise durch Schweißen am Gelenkgehäuse befestigt sein, was einen zusätzlichen Fertigungsschritt bedingt.

Davon ausgehend liegt der Erfindung die Aufgabe zugrunde, eine technisch verbesserte Befestigung eines Dichtungsbalges an einem Gelenkgehäuse zu schaffen, welche schnell und sicher zu befestigen ist. Insbesondere soll die Befestigung in einem einzigen Arbeitsschritt vorgenommen werden können.

Zur technischen **Lösung** dieser Aufgabe wird vorgeschlagen, in die Mantelfläche der L-förmigen Ausnehmung eine an die Stirnfläche angrenzende, umlaufende Ringnut einzuarbeiten, in die der Haltering mit einem inneren Rand des inneren Kreisringes eingreift.

Bezüglich des Verfahrens wird außerdem vorgeschlagen, daß bei Beginn der Montage der Haltering mit einem stumpf nach innen abgewinkelten inneren Kreisring gegen die Stirnfläche der Ausnehmung gebracht und anschließend der Haltering an einem äußeren Rand seines äußeren Kreisringes von einem sich in Richtung auf das Gelenkgehäuse erweiternden Konus eines Werkzeuges erfaßt wird, wobei der innere Ronh des Halteringes in eine in die Mantelfläche der L-förmigen Ausnehmung eingeorbeitete und an die Stirnfläche angrenzende, umlanfende Ringnut hineinverformt und der äußere Keisring des Halteringes nach innen radial gebogen und den Randwulst umschließend verformt wird.

Der wesentliche Erfindungsgedanke besteht also darin, die Aufnehmung und den Haltering so zu gestalten, daß in einem einzigen Arbeitsschritt durch entsprechendes Verformen des Halteringes dieser einerseits in die Ringnut eingreift und auf die Weise am Gelenkgehäuse fixiert ist und andererseits der Randwulst dichtend umschlossen wird.

Bei einer Ausgestaltung des Erzeugnisses ist vorgesehen, daß Material des Randwulstes teilweise in die Ringnut ragt. Dieses Merkmal läßt sich insbesondere durch eine entsprechend große Dimensionierung der Ringnut verwirklichen und bietet den Vorteil, daß der Randwulst nicht nur an seiner Außenseite durch den äußeren Kreisring des Halteringes gehalten wird, sondern auch an seiner Innenseite, da das in die Ringnut ragende Material des Randwulstes diesem eine zusätzliche Haltekraft verleiht. Außerdem wird die Abdichtung zwischen dem Gelenkgehäuse und dem Randwulst verbessert.

Bei einer weiteren Ausgestaltung der Erfindung ist vorgesehen, daß der den Randwulst umfassende äußere Kreisring des Halteringes an seinem äußeren Rand nach außen umgebördelt ist. Bezüglich des Verfahrens wird vorgeschlagen, daß bei der Verformung des Halteringes der äußere Rand des äußeren Kreisringes durch den Konus nach außen umgebördelt wird. Auf diese Weise wird die Gefahr einer Beschädigung des Dichtungsbalges beim Umbördeln des Halteringes vermieden.

Weitere Einzelheiten und Vorteile des Gegenstandes der Erfindung ergeben sich aus der nachfolgenden Beschreibung der zugehörigen Zeichnugen, in denen eine bevorzugte Ausführungsform dieser Befestigung dargestellt ist. In den Zeichnungen zeigen:

Fig. 1 Ein Kugelgelenk teilweise geschnitten in Seittenansicht;

Fig. 2 einen am Gelenkgehäuse anliegenden, noch unverformten Haltering mit einem Konus eines zur Verformung dienenden Werkzeuges in einer geschnitten Teilansicht;

Fig. 3 einen fertig verformten, den Randwulst umschließenden Haltering mit noch an dem Haltering anliegendem Werkzeug in einer geschnittenen Teilansicht.

Das dargestellte Kugelgelenk besteht aus einem Gelenkgehäuse 1 mit einem darin angeordneten Kugelzapfen 2 und einem Dichtungsbalg 3, der mit seinen Enden sowohl am Gelenkgehäuse 1 als auch am Kugelzapfen 2 festgelegt ist.

Der untere Rand des Gelenkgehäuses 1 besitzt eine umlaufende, in etwa L-förmige Ausnehmung 4, die von einem Haltering 5 umgeben ist. Der Haltering 5 umgreift einen Randwulst 6, der den gehäuseseitigen Rand des Dichtungsbalges 3 bildet.

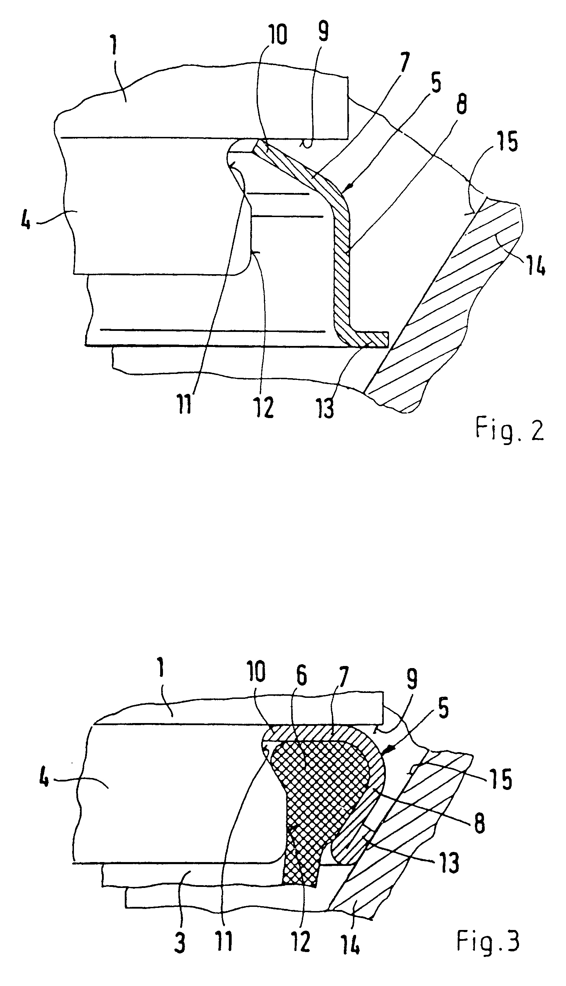

In Figur 3 ist dargestellt, daß der Haltering 5 sich aus einem inneren Kreisring 7 und einem äußeren Kreisring 8 zusammensetzt. Der innere Kreisring 7 liegt an einer die Ausnehmung 4 axial begrenzenden, ringförmigen Stirnfläche 9 des Gelenkgehäuses an und ragt mit einem inneren Rand 10 in eine Ringnut 11, die in die Mantelfläche 12 der L-förmigen Ausnehmung 4 eingearbeitet ist. Die Ringnut 11 grenzt dabei direkt an die ringförmige Stirnfläche 9 an. Die Herstellung der Ringnut 11 kann mit einem mit einer üblichen 60°-Wendeschneidplatte bestückten Drehmeißel erfolgen. Beim Drehen wird das Schneidwerkzeug bis an die Stirnfläche 9 herangefahren und anschließend mit radialem Vorschub in die Mantelfläche 12 eingefahren. Über eine Rundung geht der innere Kreisring 7 des Halteringes 5 in den äußeren Kreisring 8 über, wobei die beiden Kreisringe 7, 8 zueinander im spitzen Winkel verlaufen. Der äußere Kreisring 8 umschließt den Randwulst 6 an dessen Außenseite und ist an einem äußeren Rand 13 um 180° nach außen umgebördelt. Der Haltering 5 weist damit keine scharfe Kante auf, die zu Beschädigungen am Dichtungsbalg 3 führen könnte.

In fertig montierten Zustand ist der Randwulst 6 also sowohl durch den inneren Kreisring 7 als auch durch den äußeren Kreisring 8 des Halteringes 5 umschlossen und liegt innen an der Mantelfläche 12 dichtend an, wobei Material des Randwulstes 6 teilweise in die Ringnut 11 ragt.

In Figur 2 ist der Haltering 5 in noch nicht verformten Zustand dargestellt. Im Querschnitt betrachtet, ist der innere Kreisring 7 im stumpfen Winkel zum äußeren Kreisring 8 angeordnet, der äußere Rand 13 steht radial nach außen ab. In einem ersten Verfahrensschritt wird der Haltering 5 mit seinem inneren Rand 10 gegen die Stirnfläche 9 gesetzt, wobei, in Figur 2 nicht dargestellt, der Dichtungsbalg 3 mit dem Randwulst 6 bereits in den Haltering 5 eingelegt ist. In einem folgenden Verfahrensschritt wird ein Werkzeug 14 mit einem sich in Richtung auf das Gelenkgehäuse 1 öffnenden Konus 15 auf den äußeren Rand 13 des Halteringes 5 aufgesetzt und durch eine axiale Bewegung des Werkzeuges 14 in Richtung auf das Gelenkgehäuse 1 der Haltering 5 um den Randwulst 6 herumgebogen. Dabei finden in erster Linie drei Verformungen statt: Der Haltering 5 legt sich mit seinem inneren Kreisring 7 vollständig an die Stirnfläche 9 an, wobei sich der innere Rand 10 des Halteringes bis in die Ringnut 11 hineinschiebt; der äußere Kreisring 8 des Halteringes 5 wird radial nach innen gebogen und umschließt dabei den Randwulst 6; der äußere Rand 13 des Halteringes 5 wird durch den Konus 15 unmittelbar erfaßt und um 180° umgelegt, so daß er auf dem äußeren Kreisring 8 aufliegt. Dieses Endstadium der Verformung des Halteringes 5 zeigt Figur 3.

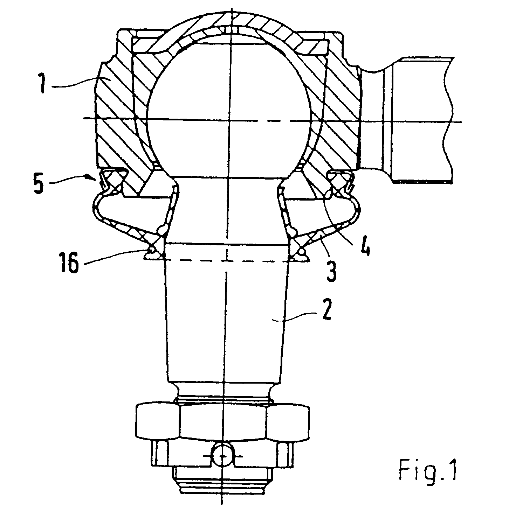

Wie in Figur 1 dargestellt ist, besteht die Befestigung des Dichtungsbalges 3 am Kugelzapfen 2 aus einem Spannring 16.

## Ansprüche

1. Befestigung eines Dichtungsbalges (3) am Gelenkgehäuse (1) eines Kugelgelenks, bei welcher der Dichtungsbalg mit einem Randwulst (6) in einer von einer zylindrischen Mantelfläche und einer ringförmigen Stirnfläche gebildeten L-förmigen Ausnehmung (4) am äußeren Rand einer Gehäuseöffnung liegt und bei welcher der Randwulst durch einen radial nach innen gebogenen äußeren Kreisring (8) eines Halteringes (5) umfaßt ist, der mit einem inneren Kreisring auf der Stirnfläche der L-förmigen Ausnehmung aufliegt, **gekennzeichnet durch** eine in die Mantelfläche (12) der L-förmigen Ausnehmung (4) eingearbeitete und an die Stirnfläche (9) angrenzende, umlaufende Ringnut (11), in die der Haltering (5) mit einem inneren Rand (10) des inneren Kreisringes (7) nach Verformung desselben eingreift.

2. Befestigung nach Anspruch 1, dadurch gekennzeichnet, daß das Material des Randwulstes (6) teilweise in die Ringnut (11) ragt.

3. Befestigung nach einem der Ansprüche 1 und 2, dadurch gekennzeichnet, daß der den Randwulst (6) umfassende äußere Kreisring (8) des Halteringes (5) an seinem äußeren Rand (13) nach außen umgebördelt ist.

4. Verfahren zur Besfestigung eines Dichtungsbalges (3) am Gelenkgehäuse (1) eines Kugelgelenks, bei dem der Dichtungsbalg mit einem Randwulst (6) in eine von einer zylindrischen Mantelfläche und einer ringförmigen stirnfläche gebildete L-förmige Ausnehmung (4) gebracht und durch Umbiegen eines äußeren Kreisringes (8) eines Halteringes (5) in dieser Stellung fixiert wird, **dadurch gekennzeichnet,** daß bei Beginn der Montage der Haltering (5) mit einem stumpf nach innen abgewinkelten inneren Kreisring (7) gegen die Stirnfläche (9) der Ausnehmung (4) gebracht und anschließend der Haltering (5) an einem äußeren Rand (13) seines äußeren Kreisringes (8) von einem sich in Richtung auf das Gelenkgehäuse (1) erweiternden Konus (15) eines Werkzeuges (14) erfaßt wird, wobei der innere Rand (10) des Halteringes (5) in eine in die Mantelfläche der L-förmigen Ausnehmung (4) eingeorbestete und an die Stirnfläche (9) angrenzende, umlanfende Ringunt (11) hineinverformt und der änßere Kreisring (8) des Halteringes (5) nach innen radial gebogen und den Randwulst (6) umschließend verformt wird.

5. Verfahren nach Anspruch 4, dadurch gekennzeichnet, daß bei der Verformung des Halteringes (5) der äußere Rand (13) des äußeren Kreisringes (8) durch den Konus (15) nach außen umgebördelt wird.

## Claims

1. Fixing of a sealing bellow (3) on the case (1) of a ball joint, in which the sealing bellow lies with an edge ridge (6) in an L-shaped recess (4), formed by a cylindrical outer surface and an annular end face, on the outer edge of a case opening, and in which the edge ridge is enclosed by a radially inwardly curved outer circular ring (8) of a fastening ring (5) which rests with an inner circular ring on the end face of the L-shaped recess, characterised by a circumferential annular groove (11), which is worked into the outer surface (12) of the L-shaped recess (4) and adjoins the end face (9), in which annular groove the fastening ring (5) engages with an inner edge (10) of the inner circular ring (7) after the latter has been deformed.

2. Fixing according to Claim 1, characterised in that the material of the edge ridge (6) projects partially into the annular groove (11).

3. Fixing according to one of Claims 1 and 2, characterised in that the outer circular ring (8) of the fastening ring (5) enclosing the edge ridge (6) is beaded outwards at its outer edge (13).

4. Method for fixing a sealing bellow (3) on the case (1) of a ball joint, in which the sealing bellow is placed with an edge ridge (6) in an L-shaped recess, formed by a cylindrical outer surface and an annular end face, and is fixed in this position by bending an outer circular ring (8) of a fastening ring (5), characterised in that at the beginning of assembly, the fastening ring (5) is placed with an inwardly obtusely angled inner circular ring (7) against the end face (9) of the recess (4) and the fastening ring (5) is subsequently engaged at an outer edge (13) of its outer circular ring (8) by a cone (15) of a tool (14) widening towards the case (1), the inner edge (10) of the fastening ring (5) being deformed to fit into a circumferential annular groove (11) which is worked into the outer surface (9) of the L-shaped recess (4) and adjoins the end face (9) and the outer circular ring (8) of the fastening ring (15) being curved radially inwards and deformed so as to enclose the edge ridge (6).

5. Method according to Claim 4, characterised in that, during the deformation of the fastening ring (5), the outer edge (13) of the outer circular ring (8) is beaded outwards by the cone (15).

## Revendications

1. Fixation d'un soufflet d'étanchéité (3) sur le boîtier (1) d'une articulation à rotule, dans laquelle le soufflet d'étanchéité est logé, par un bourrelet de bordure (6), dans un évidement (4) en L, formé par une enveloppe cylindrique et une surface frontale annulaire, contre le bord extérieur d'une ouverture du boîtier, et dans laquelle le bourrelet de bordure est entouré par un anneau circulaire (8) extérieur, courbé radialement vers l'intérieur, d'une bague de fixation (5) qui repose, par un anneau circulaire intérieur, sur la surface frontale de l'évidement en L, caractérisée par une rainure annulaire (11) continue, ménagée dans la surface d'enveloppe (12) de l'évidement en L (4) et adjacente à la surface frontale (9), et dans laquelle la bague de fixation (5) s'engage, par un bord intérieur (10) de l'anneau circulaire intérieur (7) après déformation de celui-ci.

2. Fixation selon la revendication 1, caractérisée en ce que le matériau du bourrelet de bordure (6) pénètre partiellement dans la rainure annulaire (11).

3. Fixation selon la revendication 1 ou 2, caractérisée en ce que l'anneau circulaire extérieur (8) de la bague de fixation (5), entourant le bourrelet de bordure (6), est replié vers l'extérieur, sur son bord extérieur (13).

4. Procédé de fixation d'un soufflet d'étanchéité (3) sur le boîtier (1) d'un joint à rotule, dans lequel le soufflet d'étanchéité est amené, par un bourrelet de bordure (6), dans un évidement en L (4) formé par une surface d'enveloppe cylindrique et une surface frontale annulaire, et est fixé dans cette position, par repliage d'un anneau circulaire extérieur (8) d'une bague de fixation (7), caractérisé en ce qu'au début du montage, la bague de fixation (5) est amenée contre la surface frontale (9) de l'évidement (4), par un anneau circulaire intérieur (7), coudé en dedans suivant un angle obtus, et en ce qu'ensuite la bague de fixation (5) est saisie, sur un bord extérieur (13) de son anneau circulaire extérieur (8), par un cône (15) d'un outil (14), s'élargissant en direction du boîtier d'articulation (1), le bord intérieur (10) de la bague de fixation (5) pénétrant en se déformant dans une rainure annulaire (11) continue, ménagée dans la surface d'enveloppe de l'évidement en L (4) et adjacente à la surface frontale (9), et que l'anneau circulaire extérieur (8) de la bague de fixation (5) plié radialement vers l'intérieur entoure en se déformant le bourrelet de bordure (6).

5. Procédé selon la revendication 4, caractérisé en ce que lors de la déformation de la bague de fixation (5), le bord extérieur (13) de l'anneau circulaire extérieur (8) est rabattu vers l'extérieur par le cône (15).

1

5

16

3

4

2

Fig.1

Fig. 2

Fig. 3